# EUROPEAN PATENT SPECIFICATION

(11) **EP 3 621 801 B1**
(45) Date of publication and mention of the grant of the patent: **30.08.2023**
(21) Application number: 18829470.6
(22) Date of filing: 28.11.2018
(51) Int. Cl.: B32B 5/02, B01J 20/00, B32B 5/16, B32B 5/22, B32B 5/24, B32B 7/08, B32B 13/02, B32B 13/14, B32B 37/24, C04B 28/04, C04B 16/02, E02B 11/00, E02D 3/00, E02D 17/20, E02D 31/02

(54) **CEMENT TEXTILE MULTILAYER COMPOSITES AND THEIR METHOD OF PRODUCTION**
ZEMENT-TEXTIL-MEHRFACHSCHICHTKOMPOSITE UND VERFAHREN ZU DEREN HERSTELLUNG
COMPOSITES MULTICOUCHES TEXTILES EN CIMENT ET LEUR PROCÉDÉ DE PRODUCTION

(30) Priority: 01.12.2017 GR 20170100544
(43) Date of publication of application: 18.03.2020
(73) Proprietor: Thrace Nonwovens & Geosynthetics S.A., 67100 Xanthi (GR)
(72) Inventor: LYKOUDIS, Spiragggelos, 26224 Patras (GR)
(74) Representative: Samouilidis, Emmanouil
(86) International application number: PCT/IB2018/059401
(87) International publication number: WO 2019/106559

(56) References cited:
- US-A1- 2014 170 916
- DATABASE WPI Week 201658 Thomson Scientific, London, GB; AN 2016-546985 XP002789009, & KR 2016 0086798 A (CHUNG H I) 20 July 2016 (2016-07-20)

## Description

The present invention relates to flexible geo-composites. Such geo-composites are multilayer geotextiles with a cementitious middle layer.

Multilayers may be used in various constructional and civil engineering applications, for example for capping of ditches, for the lateral drainage of surface water and precipitation along roadways and railways, for capping of riverbanks, for the erosion control, as barriers in landfill lining systems.

Examples of known multilayers are presented in US 4,622,260, US 4,495,235 and EP 2 213 777 A.

US 2014/170916 describes a cementitious composite material with a plurality of layers, for in-situ hydration, the composite comprising a permeable layer 20 an impermeable, e.g. sealing, layer and a three dimensional volume layer, i.e. a structure layer 40, including strands 42. A cementitious layer 30 is disposed within the structure layer 40, which includes a plurality of cementitious particles 32. The structure layer 40 is an independent structural material configured to support the weight of cementitious layer 30. Strands 42 of the structure layer are polypropylene or another material, e.g., silicon carbide, aluminum oxide, nylon, polypropylene, coconut fiber, cellulose fiber, other synthetic materials, other natural materials, etc. (the numbers in this paragraph refer to the reference signs used in US 2014/170916).

KR20160086798 refers to a functional drain layer serving as a drainage layer function, a drain mat, a drainage mat and a bio drainage mat, whose manufacture includes embedding material between cloth and non-cloth woven fabric and sewed by needle-punching.

The production of known geo-composites is cumbersome. Relative simpler methods of production are used for the production of rigid geo-composites, which are difficult to transport and to take the shape of the surface, where they are applied.

The object of the invention is a multilayer that is flexible and easily manufactured, transported and laid in position. A further object of the invention is a multilayer that is environmental friendly both during production and when laid in position. A further object of the invention is a method of production of such multilayers.

The invention is defined in the independent claims.

A method according to the invention produces a multilayer that includes a non-woven fibrous first layer, a second layer and a core layer of cementitious material between the first layer and the second layer. The method includes the needle-bonding of the first layer, the second layer and the core layer, so that a plurality of fibers of the first layer are driven and attached in the second layer and the obtaining of a multilayer that is flexible, it is configured to be curved in two directions and it becomes rigid upon absorbing water.

A multilayer according to the invention comprises a non-woven fibrous first layer, a second layer and a core layer of cementitious material between the first layer and the second layer, whereby a plurality of fibers of the first layer penetrate the core layer and are arranged on the second layer. The multilayer is flexible, configured to be curved in at least one direction, preferably in two directions, and to become rigid upon absorbing water.

The cementitious material includes cement and cellulose fibers. In one example the cementitious material comprises a mixture of an ordinary Portland cement and cellulose fibers. Cellulose fibers, such as the fibers that are incorporated in the invention, are natural fibers from plants rather than man-made synthetic chemical compounds or man-made semi-synthetic chemical compounds based on cellulose.

A multilayer sandwich geotextile according to the invention has the following advantages: a) easy and quick installation procedure, b) it does not require specialized personnel, c) easy transportation to site since the products may be handled in rolls, d) they do not require expensive and voluminous machinery for installation.

Preferably the cementitious material includes cellulose fibers and the w/w percentage of the cellulose fibers is at least 0.3% and does not exceed 5% of the weight of the cement of the cementitious material.

Optionally, polypropylene micro fibers (abbreviation PPMF) may be added to the cementitious material. The weight of the PPMF depends on the composition of the cementitious material and it is not less than 0.4% and more than 4% of the weight of the cementitious material. The PPMF may be round shaped with a linear weight not less than 5 dtex and not more than 8 dtex (1 dtex: gr per 10000 m length of filament). The cross-sectional diameter ranges from 25 µm up to 35 µm and the length ranges from 3 mm up to 12 mm (1 µm = 10⁻⁶ m and 1 mm = 10⁻³ m). With the addition of PPMF, an improvement of the final flexural strength and the control of cracks of the final product after hydration have been observed.

The core layer may further include solid admixtures and/or glycol-oil mixtures. Preferably, the weight of the admixtures, for example the solid admixtures and the glycol-oil mixtures, does not exceed 5% of the total weight of the cement that is included in the cementitious material. The addition of admixtures, such as High-Range Water-Reducing Admixtures (abbreviation: HRWRA) to concrete or mortar allows the reduction of the water to cement ratio, without affecting the workability of the mixture, and enabling the production of self-consolidating concrete and high performance concrete. This effect drastically improves the performance of the hardening fresh paste. HRWRA's are available in the market in form of aqueous solutions of modified polycarboxylates and are usually added to concrete mixtures just before the application. In a multilayer according to the invention, admixtures are added in solid form, preferably to the cementitious material rather than in other stages of the production, to avoid contamination of the cementitious mixture with water during storage and transportation and in general before their application.

Optionally, the first layer has manmade staple fibers and the second layer has yarns and it is woven or non-woven. In one example the second layer is fibrous and non-woven and a plurality of fibers of the second layer penetrate the core layer and are arranged to the first layer by needle bonding.

The first layer and the second layer may have strips along almost parallel edges, which overhang from the core layer. The strips of the first layer and the strips of the second layer are bonded, for example by needle bonding, so as to encapsulate the cementitious material and the core layer therebetween. In one embodiment the width of the strips is equal or larger than 10 cm.

An embodiment of the method according to the invention incudes i) disposing cementitious material on the second layer, ii) placing the first layer on the cementitious material, iii) needle bonding the first layer and the second layer with elongated elements that drive a plurality of fibers of the first layer through the cementitious material and the core layer to attach the said plurality of fibers to the second layer, iv) providing the multi-layer ready for transportation. Optionally after needle bonding, the method includes heating the second layer and/or cutting the multilayer. With the application of heat on the bottom surface of the second layer, the end portions of protruding fibers are melted and form relatively thick shaped ends that lock the fibers in this layer. The applied heat further reduces the porosity of the second layer.

Preferred embodiments of the invention are described with reference to **Figures 1 to 7****:**
**Figure 1** illustrates schematically the production process of the multilayer composite.
**Figure 2** illustrates the layers in a cross section of the multilayer composite.
**Figure 3** shows a cross section of the multilayer composite.
**Figure 4** illustrates the layers in a cross section of the multilayer composite during the needle punching process, which bonds the three layers together.
**Figure 5** captures the needle punching process, which bonds the three layers together.
**Figure 6** illustrates the melting of the protruded fibers in the base layer.
**Figure 7** shows an example of an edge of a multilayer composite.

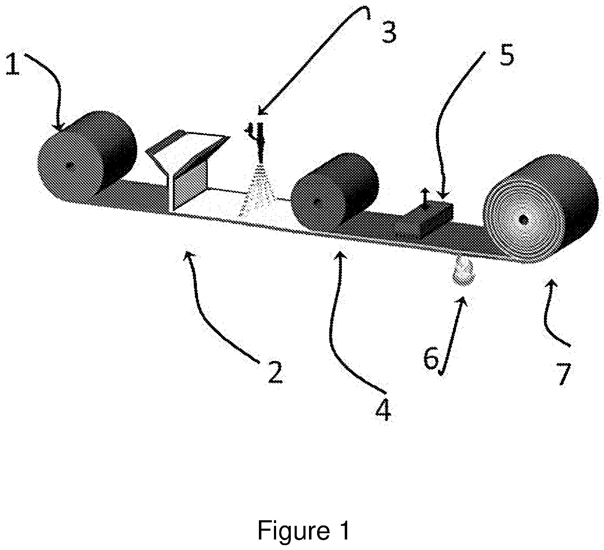

**Figure 1** illustrates an example of the manufacturing process of a multilayer geotextile according to the invention. A base layer **10** of textile is drawn from an unwinding station **1.** A feed roller **2** spreads more or less evenly cementitious material on the base layer **10** to form a core layer **12.** The cementitious material contains cement and various kinds of cellulose fibers for dust suppression. Cellulose fibers are natural fibers obtained from plants and they offer an economical and environmentally friendly solution for dust suppression in the cementitious material. Preferably the weight of the cellulose fibers ranges from 0.3% to 5.0% of the weight of the cement, i.e. 0.3% to 5.0% w/w. In general, cellulose material may be in natural form, for example the cellulose fibers that are used in the invention and in man-made synthetic or semi-synthetic chemical compounds, for example in the form of powder.

The cementitious material may also contain various solid admixtures, such as High-Range Water-Reducing Admixtures, abbreviation: HRWRA, in solid form. HRWRA's are polymers, for example modified polycarboxylates, which act as dispersants to avoid particle segregation, for example gravel and coarse and fine sands, and to improve the flow and rheological characteristics of suspensions in concrete applications. Preferably the admixtures in solid form are added to the cementitious material rather than before hydration of the flexible multi-layer at situ.

The presence of solid admixtures in the cementitious material as well as the spraying of the cementitious material with glycol-oil mixture are optional and independent of the presence of cellulose fibers. The weight of the solid admixtures in the cementitious material is up to 5% the weight of the cement. Thus, if the cementitious material contains 100 mass units of cement, it may also contain 5 mass units of cellulose fibers and/or 5 mass units of solid admixtures.

Optionally, polypropylene micro fibers (abbreviation PPMF) may be added to the cementitious material. The weight of the PPMF depends on the composition of the cementitious material and it is not less than 0.4% and more than 4% of the weight of the cementitious material. The PPMF may be round shaped with a linear weight not less than 5 dtex and not more than 8 dtex. The cross-sectional diameter ranges from 25 µm up to 35 µm and the length ranges from 3 mm up to 12 mm. With the addition of PPMF, an improvement of the final flexural strength and the control of cracks of the final product after hydration have been observed.

The cementitious material may also contain additives like silica fume, fly ash, slag, sand, etc. maybe also added. The dosage of additives has an effect on properties of the final product. The key role of the additives is to control the hydration process and reduce the overall cost. Additives could also be byproducts of other processes. The dosage is adapted considering the final applications and requirements.

Subsequently, as the base layer **10** with the cementitious material moves along the production line, it is guided to the spray device **3** with a glycol-oil mixture, which is added for further dust suppression.

In the second unwinding station **4** a top layer **16** of textile is unwound and positioned on the top of the cementitious material.

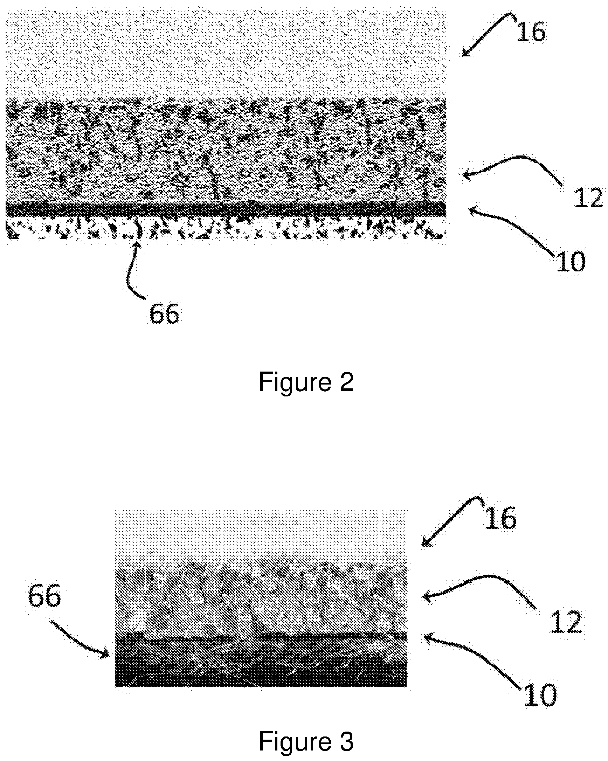

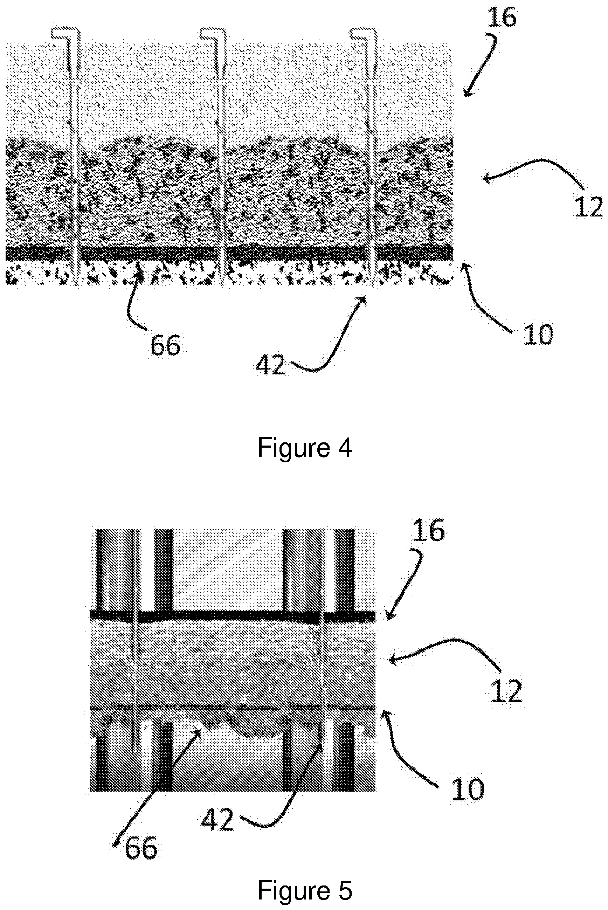

Thereafter the sandwich/multilayer structure of the base layer **10,** the core layer **12** of cementitious material and the top layer **16** advances to the needle punching device **5,** where fibers from the top layer **16** are driven by the needles **42** shown in **Figure 4 and Figure 5** of the needle punching device **5** through the cementitious material and the core layer **12** to the base layer **10.** The fibers of the capping nonwoven textile, i.e. of the top layer **16,** are forced to penetrate transversally both the encased cementitious material that forms the core layer **12** and the base layer **10** by the palindromic movement of needles **42** and anchored between the fibers or yarns of the base layer **10.** The end portions **66** of the fibers of the top layer **16** which are anchored between the fibers or yarns of the base layer **10** are shown in **Figures 2 to 7****.**

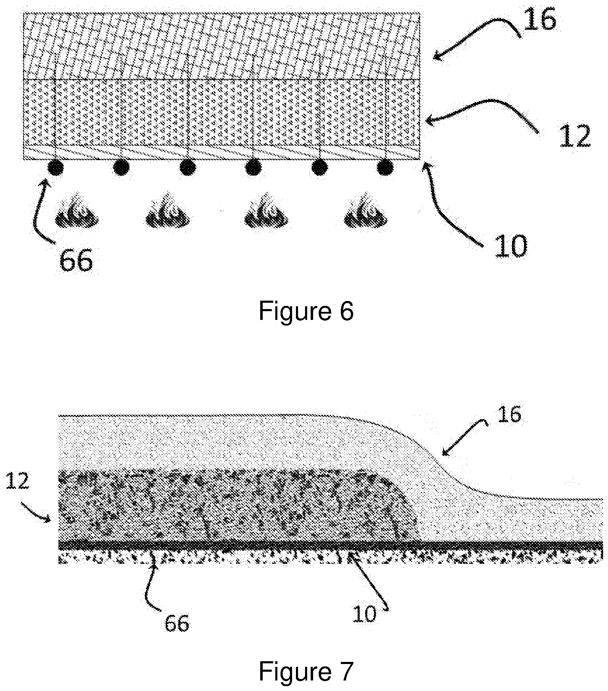

The width of the top layer **16** and the width of the base layer **10** are larger than the width of the core layer **12** of cementitious material, so that both the top layer **16** and the base layer **10** have stripes overhanging the core layer **12** and facing one another. **Figure 7** shows schematically a stripe of the top layer **16** that extends beyond the core layer **12** and is attached to the base layer **10.** Preferably the width of the overhanging stripes of the top layer **16** and the base layer **10** are at least 10 cm. i.e. the width of the top layer **16** and the base layer **10** are at least 20 cm larger than the width of the core layer **12.** These overhanging stripes of the base layer **10** and top layer **16** are connected, optionally by needled punching, to encapsulate the cementitious core layer **12** and avoid loss of material from the edges. The width is defined in the directions transverse to the direction of advancement of the base layer **10** and the top layer **16** along the production line.

A multilayer geo-composite produced by needle punching does not have self-reinforcing fibers. Such a geo-composite behaves as a continuum body that exhibits monolithic behavior, which is assured mechanically by the needle punching process, through which fibers of the nonwoven material of capping top layer **16** are forced to penetrate transversally both the encased core layer **12** and the base layer **10** by the palindromic movement of the needles **42.** A multilayer that is produced with a method according to the invention presents improved mechanical properties in terms of internal shear strength and peel strength.

Bonding of the different layers of the multi-layered geotextile is improved by the heat provided at heating station **6.** Heating may be effected by hot air or flame or any other heating means. The applied heat further reduces the porosity of the base layer **10.**

With the application of heat on the bottom surface of the base layer **10** as shown in **Figure 6****,** the end portions **66** of protruding fibers are melted and form relatively thick shaped ends that lock the fibers in the fabric of the base layer **10.** Thus, the process enhances the anchoring of the protruding fibers of the top layer **16** to the base layer **10.**

The needle punching may be effected in the opposite direction, i.e. from the base layer **10** towards the top layer **16,** fibers of the base layer **10** are anchored to the top layer **16.** In such a case the base layer **10** is a nonwoven textile.

Finally, the multilayer material is driven to station **7** to be winded as shown in **Figure 1****.** Optionally the multilayer material may be cut to size in appropriate length. The rolls are weighted and a water proof packaging is applied to prevent the hydration of the cementitious material of the core layer **12** of the product before its final application.

**Figure 2** shows schematically a typical cross-section of the final multilayer or sandwich product and **Figure 3** is a picture of a typical cross-section. It comprises a core layer **12** consisting of a cementitious material sandwiched between a woven or nonwoven base layer **10** and a non-woven fibrous upper layer **16.** In one embodiment, the woven or nonwoven base layer **10** and the non-woven top layer **16** are polyolefin geotextile. Other woven fabrics, solely for the base layer **16,** or non-woven textiles are anticipated. The top layer **16** and the base layer **10** may be different.

The cementitious material that forms the core layer **12** of one embodiment is a cementitious mixture of ordinary cement, for example Portland cement, cellulose fibers and a suitable high-water reducer agent in dry form. Optionally the mixture may also contain solid admixtures and/or additives such as silica fume, fly ash or/and other inert material in various contents and admixtures such as glycol oil mixture.

Admixtures are defined in ASTM Designation C494/C494M (Standard Specifications for Chemical Admixtures for Concrete).

Concrete additives are fine materials which are generally added to concrete in significant proportions (around 5-20 %). They are used to improve or obtain specific fresh and/or hardened concrete properties. EN 206-1 classifies the additives in two types: Type I, namely virtually inactive materials such as lime fillers, quartz dust and colour pigments and Type II, namely pozzolanic or latent hydraulic materials such as natural pozzolans (trass), fly ash and silica dust.

The cellulose fibers are obtained from plants and they are used to reduce significantly the dustiness of the cementitious material. For example, tests on a cementitious material applying the Single Drop Method using the Dustview II^{™} device of PALAS^{®}, showed that the addition of cellulose fibers reduced the dust value from 80% to below 5%. Preferably, the weight of the cellulose fibers does not exceed in average 5% the weight of the cementitious mixture. The appropriate cellulose fibers used as dustiness reducer should have an ash content below 8%, w/w an average fiber length ranging from 50 µm to 250 µm (1 µm=10⁻⁶ of a meter), a bulk density ranging from 120 gr/Itr to 220 gr/Itr (gr/Itr: grams per liter) and a pH value ranging from 5-9. Spraying of glycol oil mixtures on the cementitious mixture reduces further the dust value.

In one embodiment of the invention, a woven polyolefin geotextile that can be used as base layer 16 may include Polyolefin tape shaped threads with the following cross-sectional dimensions: thickness from 25 µm up to 100 µm and width from 1 mm up to 3 mm. The woven fabric has an area weight ranging from 60 gr/m² up to 200 gr/m² and a thickness ranging from 0.5 mm up to 1.2 mm.

A nonwoven textile that can be used as base layer or as upper layer may include polyolefin staple fibers of 4 dtex up to 8 dtex (1 dtex: gr per 10000 m length of filament) with a cross-sectional diameter ranging from 25 µm up to 35 µm and length ranging from 75 mm up to 105 mm (1 µm = 10⁻⁶ m and 1 mm = 10⁻³ m) produced with or without thermal treatment. The area weight can vary from 90 up to 300 gr/m² and the thickness from 1 mm up to 4 mm (thickness measured under 2 kPa pressure). The fibers of the nonwoven upper layer are the ones that penetrate through the core layer to the base layer. Their physical properties are the properties of the staple fibers used in the production of the nonwoven upper layer.

In addition to the fibers of the top layer **16** that are driven through the cementitious material to the base layer **10,** yarns may maintain the connection of the capping top layer **16** and the bottom layer **10.** In general, as no self-reinforcing fibers exist in the geo-composite, its monolithic behavior is assured mechanically by the needle punching process through which fibers of the nonwoven material of capping top layer **16** are forced to penetrate transversally both the encased core layer **12** and the base layer **10** by the palindromic movement of the needles **42.** Such a geo-composite presents improved mechanical properties.

The following example describes an example of a cement textile multilayer composite, or composite cement cloth, that is produced with a needle punching process according to the invention.

The base layer and top layer textiles used are shown in **Table 1**

**Table 1**

| | Type of Textile | Area Weight (gr/m²) | Char. Opening Size O₉₀ (µm) | Thickness at 2 kPa (mm) |
|---|---|---|---|---|
| | | EN-ISO 9864 | EN-ISO 12956 | EN-ISO 9863-1 |
| Base layer 10 | Polypropylene (PP) Woven | 100 | 150 | 0.45 |
| Top Layer 16 | Polypropylene (PP) Needle Punched Nonwoven | 200 | 90 | 2.7 |

Definition of O₉₀ (according ISO-EN 12956): Size of opening which allows particles of size d90 to pass through the geotextile or the geotextile related product, where d90 is particle size for which 90% by mass is smaller than the mass of measured particles.

Using the textiles referred in **Table 1** nine samples of three different thicknesses and three compositions of the core layer **12** have been tested to demonstrate the effect of the admixtures and additives regarding the compressive strength. Compressive strength is measured according ASTM C109-02. Results are shown in **Table 2.**

**Table 2:**

| | | | | |
|---|---|---|---|---|
| Compressive strength according to ASTM C109-02 | Final composite thickness | CEM II - 42.5 | CEM II - 42.5 | CEM II-42.5 |
| | | + 1.5% CF | + 1.5% CF | + 1.5% CF |
| | | | + 0.5% HRWRA | + 2% HRWRA |
| | | | | + 10% SF |
| | mm | MPa | MPa | MPa |
| | 7 | 46 | 53 | 58 |
| | 12 | 49 | 54 | 57 |
| | 19 | 52 | 55 | 58 |

where:
- **CEM II-42.5** :: is the type of Portland cement used according to EN 197-1 with compressive strength class 42.5
- **HRWRA** :: is a High-Range Water-Reducing Admixture, modified Polycarboxylates, in solid form
- **SF** :: is Silica Fume
- **CF** :: is Cellulose Fibers used as dust suppressing agent with characteristics shown in **Table 3.**

**Table 3:**

| Color | Cellulose content (% w/w) | Bulk density (kgr/m³) | pH value | Ash content (% w/w) | Avg. length of fibers (µm) |
|---|---|---|---|---|---|
| white | ≈95 | >120 | 5-9 | <8 | 60 |

The cellulose fibers of Table 3 contain 95% cellulose and 5% ash.

In use, when the geo-composite is hydrated, i.e. it absorbs water, the geo-composite becomes rigid. Hydration is achieved, using typical tap water, for example water directly from the public network, or any water solution.

A multilayer according to the invention may be used among others in any of the following applications: a) capping of ditches used for the lateral drainage of surface water and precipitation along roadways and railways, b) capping of riverbanks and slopes for the erosion control, c) barrier in landfill lining systems, d) local repairs in concrete structures, such as screeds and roofs, e) local repairs of buried drainage concrete pipes, g) local repair in shotcrete body mass.

In the present the terms «fabric» and «textile» are used as synonyms.

## Claims

1. Method of production of a multilayer including a non-woven fibrous first layer **(16),** a second layer **(10)** and a core layer **(12)** of cementitious material **(20)** including cement and cellulose fibers between the first layer **(16)** and the second layer **(10),** the method comprising i) spreading cementitious material on the second layer **(10),** ii) placing the first layer **(16)** on the cementitious material, iii) needle bonding the first layer **(16)** and the second layer **(10)** with elongated elements that drive a plurality of fibers of the first layer **(16)** through the core layer **(12)** to attach the said plurality of fibers to the second layer **(10)** and iv) obtaining of the multilayer that is flexible, it is configured to be curved in two directions and it becomes rigid upon absorbing water.

2. Method **according to claim 1,** whereby the weight of the cellulose fibers is at least 0.3% and preferably does not exceed 5% the weight of the cement of the cementitious material.

3. Method **according claim 1 or claim 2,** whereby the cementitious material further incudes solid admixtures preferably not more than 5% of the total weight of the of the cement of the cementitious material.

4. Method **according to any one of claims 1 to 3,** whereby following the needle bonding of the first layer **(16)** and the second layer **(10)** the method further includes heating the second layer **(10).**

5. Method **according to any one of claims 1 to 4,** whereby the second layer **(10)** is fibrous and non-woven and the method further includes needle bonding the first layer **(16)** and the second layer **(10),** with elongated elements that drive a plurality of fibers of the second layer **(10)** through the cementitious material to attach the plurality of fibers to the first layer **(16).**

6. Multilayer comprising a non-woven fibrous first layer **(16),** a second layer **(10)** and a core layer **(12)** of cementitous material between the first layer **(16)** and the second layer **(10),** which cementitious material includes cement and cellulose fibers, whereby a plurality of fibers of the first layer **(16)** penetrate the core layer **(12)** and are arranged on the second layer **(10)** and whereby the multilayer is flexible, configured to be curved in at least one direction and to become rigid upon absorbing water.

7. Multilayer **according to claim 6,** whereby the core layer includes polypropylene micro fibers.

8. Multilayer **according to claim 6 or claim 7,** whereby the w/w percentage of the cellulose fibers is at least 0.3% and does not exceed 5% of the weight of the cement of the cementitious material.

9. Multilayer **according to any one of claims 6 to 8,** whereby the core layer **(12)** includes solid admixtures and/or glycol-oil mixtures.

10. Multilayer **according to any one of claims 6 to 9**, whereby the first layer **(16)** has manmade staple fibers and the second layer **(10)** is woven or nonwoven.

11. Multilayer **according to any one of claims 6 to 10**, whereby the multilayer is configured to be curved in two directions.

12. Multilayer **according to any one of claims 6 to 11**, whereby the cementitious material comprises a mixture of an ordinary Portland cement and cellulose fibers.

13. Multilayer **according to any one of claims 6 to 12,** whereby first layer **(16)** and the second layer **(10)** have strips along almost parallel edges, which strips overhang from the core layer **(12)** and whereby the strips of the first layer **(16)** are bonded to the strips of the second layer **(10)** encapsulating the cementitious material of the core layer **(12)** between the said edges.

14. Multilayer **according to claim 13**, whereby the strips of the first layer **(16)** are bonded to the strips of the second layer **(10)** by needle bonding and preferably the strips of the first layer **(16)** and the strips of the second layer **(10)** have a width that is equal or larger than 10 cm.

15. Use of a multilayer **according to any one of claims 6 to 14** for any of the following applications: a) capping of ditches used for the lateral drainage of surface water and precipitation along roadways and railways, b) capping of riverbanks and slopes for the erosion control, c) barrier in landfill lining systems, d) local repairs in concrete structures, such as screeds and roofs, e) local repairs of buried drainage concrete pipes, g) local repair in shotcrete body mass.

## Patentansprüche

1. Verfahren zur Herstellung einer Mehrschicht mit einer nicht gewebten faserigen ersten Schicht **(16),** einer zweiten Schicht **(10)** und einer Kernschicht **(12)** aus zementartigem Material **(20)** mit Zement- und Zellulosefasern zwischen der ersten Schicht **(16)** und der zweiten Schicht **(10),** wobei das Verfahren umfasst: i) Streuen von zementartigem Material auf der zweiten Schicht **(10),** ii) Anordnen der ersten Schicht **(16)** auf dem zementartigen Material, iii) Vernadeln der ersten Schicht **(16)** und der zweiten Schicht **(10)** mit länglichen Elementen, die eine Vielzahl von Fasern der ersten Schicht **(16)** durch die Kernschicht **(12)** treiben, um die Vielzahl von Fasern an der zweiten Schicht **(10)** zu befestigen, und iv) Erhalten der flexiblen Mehrschicht, die flexibel ist, die in zwei Richtungen gekrümmt zu werden ausgebildet ist und die bei Wasseraufnahme steif wird.

2. Verfahren **nach Anspruch 1,** wobei das Gewicht der Zellulosefasern mindestens 0,3 % beträgt und vorzugsweise 5 % des Gewichts des Zements des zementartigen Materials nicht überschreitet.

3. Verfahren **nach Anspruch 1 oder Anspruch 2,** wobei das zementartige Material ferner feste Beimischungen enthält, vorzugsweise nicht mehr als 5 % des Gesamtgewichts des Zements des zementartigen Materials.

4. Verfahren **nach einem der Ansprüche 1 bis 3,** wobei das Verfahren nach dem Vernadeln der ersten Schicht **(16)** und der zweiten Schicht **(10)** ferner das Erhitzen der zweiten Schicht **(10)** umfasst.

5. Verfahren **nach einem der Ansprüche 1 bis 4,** wobei die zweite Schicht **(10)** faserig und nicht gewebt ist und das Verfahren ferner das Vernadeln der ersten Schicht **(16)** und der zweiten Schicht **(10)** mit länglichen Elementen, die eine Vielzahl von Fasern der zweiten Schicht **(10)** durch das zementartige Material treiben um eine Vielzahl von Fasern an der ersten Schicht **(16)** anzubringen, umfasst.

6. Mehrschicht, umfassend eine erste nicht gewebte Faserschicht **(16),** eine zweite Schicht **(10)** und eine Kernschicht **(12)** aus zementartigem Material zwischen der ersten Schicht **(16)** und der zweiten Schicht **(10),** wobei das zementartige Material Zement und Zellulosefasern enthält, wobei mehrere Fasern der ersten Schicht **(16)** die Kernschicht **(12)** durchdringen und auf der zweiten Schicht **(10)** angeordnet sind und wobei die Mehrschicht flexibel ist, in mindestens einer Richtung gekrümmt zu werden ausgebildet ist und bei Wasseraufnahme steif wird.

7. Mehrschicht **nach Anspruch 6,** wobei die Kernschicht Polypropylen-Mikrofasern enthält.

8. Mehrschicht **nach Anspruch 6 oder Anspruch 7,** wobei der w/w-Prozentsatz der Zellulosefasern mindestens 0,3 % beträgt und 5 % des Gewichts des Zements des zementartigen Materials nicht überschreitet.

9. Mehrschicht **nach einem der Ansprüche 6 bis 8,** wobei die Kernschicht **(12)** feste Beimischungen und/oder Glykol-Öl-Mischungen umfasst.

10. Mehrschicht **nach einem der Ansprüche 6 bis 9,** wobei die erste Schicht **(16)** synthetische Stapelfasern aufweist und die zweite Schicht **(10)** gewebt oder nicht gewebt ist.

11. Mehrschicht **nach einem der Ansprüche 6 bis 10,** wobei die Mehrschicht in zwei Richtungen gekrümmt zu werden ausgebildet ist.

12. Mehrschich **nach einem der Ansprüche 6 bis 11,** wobei das zementartige Material eine Mischung aus gewöhnlichem Portlandzement und Zellulosefasern umfasst.

13. Mehrschicht **nach einem der Ansprüche 6 bis 12,** wobei die erste Schicht **(16)** und die zweite Schicht **(10)** entlang nahezu paralleler Kanten Streifen aufweisen, die von der Kernschicht **(12)** überstehen, wobei die Streifen der ersten Schicht **(16)** an die Streifen der zweiten Schicht **(10)** gebunden sind so dass das Zementmaterial der Kernschicht **(12)** zwischen den Kanten eingekapselt ist.

14. Mehrschicht **nach Anspruch 13,** wobei die Streifen der ersten Schicht **(16)** durch Vernadlung mit den Streifen der zweiten Schicht **(10)** verbunden sind und vorszugweise die Streifen der ersten Schicht **(16)** und die Streifen der zweiten Schicht **(10)** eine Breite aufweisen, die gleich oder größer als 10 cm ist.

15. Verwendung einer Mehrschicht **nach einem der Ansprüche 6 bis 14** für eine der folgenden Anwendungen: a) Abdeckung von Gräben, die für die seitliche Entwässerung von Oberflächenwasser und Niederschlägen entlang von Fahrbahnen und Eisenbahnen verwendet werden, b) Abdeckung von Flussufern und Neigungen für die Erosion Kontrolle, c) Barriere in Mülldeponieauskleidungssystemen, d) lokale Reparaturen in Betonstrukturen wie Estrichen und Dächer, e) lokale Reparaturen von vergrabene Entwässerungs-Betonrohren, g) lokale Reparaturen in Spritzbetonmassen.

## Revendications

1. Procédé de fabrication d'un multicouche comprenant une première couche fibreuse et non-tissée **(16),** une deuxième couche **(10)** et une couche centrale **(12)** de matériau cimentaire **(20)** comprenant de ciment et des fibres de cellulose entre la première couche **(16)** et la deuxième couche **(10),** le procédé comprenant i) étaler de matériau cimentaire sur la deuxième couche **(10),** ii) placer la première couche **(16)** sur le matériau cimentaire, iii) aiguilletage de la première couche **(16)** et de la deuxième couche **(10)** avec des éléments allongés qui entraînent une pluralité de fibres de la première couche **(16)** à travers la couche centrale **(12)** pour attacher ladite pluralité de fibres à la deuxième couche **(10)** et iv) obtenir un multicouche qui est flexible, il est configuré pour être incurvé dans deux directions et pour devenir rigide en absorbant l'eau.

2. Procédé **selon la revendication 1,** dans lequel le poids des fibres de cellulose est d'au moins 0,3 % et de préférence ne dépasse pas 5 % du poids du ciment du matériau cimentaire.

3. Procédé **selon la revendication 1 ou la revendication 2,** dans lequel le matériau cimentaire comprend en outre des adjuvants solides, de préférence pas plus de 5 % du poids total du ciment du matériau cimentaire.

4. Procédé **selon l'une quelconque des revendications 1 à 3,** dans lequel, après l' aiguilletage de la première couche **(16)** et de la deuxième couche **(10),** le procédé comprend en outre le chauffage de la deuxième couche **(10).**

5. Procédé **selon l'une quelconque des revendications 1 à 4,** dans lequel la deuxième couche **(10)** est fibreuse et non-tissée et le procédé comprend en outre l' aiguilletage de la première couche **(16)** et de la deuxième couche **(10),** avec des éléments allongés qui entraînent une pluralité de fibres de la deuxième couche **(10)** à travers le matériau cimentaire pour attacher la pluralité de fibres à la première couche **(16).**

6. Multicouche comprenant une première couche fibreuse non-tissée **(16),** une deuxième couche **(10)** et une couche centrale **(12)** de matériau cimentaire comprenant du ciment et des fibres de cellulose entre la première couche **(16)** et la deuxième couche **(10),** moyennant quoi une pluralité de fibres de la première couche **(16)** pénètrent dans la couche centrale **(12)** et sont attachées à la deuxième couche **(10)** et moyennant quoi la multicouche est flexible, configurée pour être incurvée dans au moins une direction et pour devenir rigide lors de l'absorption d'eau.

7. Multicouche **selon la revendication 6,** dans laquelle la couche centrale comprend des microfibres de polypropylène.

8. Multicouche **selon la revendication 6 ou la revendication 7,** dans laquelle le pourcentage en poids p/p des fibres de cellulose est d'au moins 0,3 % et ne dépasse pas 5 % du poids du ciment du matériau cimentaire.

9. Multicouche **selon l'une quelconque des revendications 6 à 8,** dans laquelle la couche centrale **(12)** comprend des adjuvants solides et/ou des mélanges glycol-huile.

10. Multicouche **selon l'une quelconque des revendications 6 à 9,** dans laquelle la première couche **(16)** a des fibres discontinues synthétique et la deuxième couche **(10)** est tissée ou non-tissée.

11. M ulticouche **selon l'une quelconque des revendications 6 à 10,** la multicouche étant configurée pour être incurvée dans deux directions.

12. Multicouche **selon l'une quelconque des revendications 6 à 11,** dans laquelle le matériau cimentaire comprend un mélange d'un ciment Portland ordinaire et de fibres de cellulose.

13. Multicouche **selon l'une quelconque des revendications 6 à 12,** dans laquelle la première couche **(16)** et la deuxième couche **(10)** ont des bandes le long de bords presque parallèles, lesquelles bandes surplombent de la couche centrale **(12)** et dans laquelle les bandes de la première couche **(16)** sont liées aux bandes de la deuxième couche **(10)** encapsulant le matériau cimentaire de la couche centrale **(12)** entre lesdits bords.

14. Multicouche **selon la revendication 13,** dans laquelle les bandes de la première couche **(16)** sont liées aux bandes de la deuxième couche **(10)** par aiguilletage, de préférence les bandes de la première couche **(16)** et les bandes de la deuxième couche **(10)** ont une largeur égale ou supérieure à 10 cm.

15. Utilisation d'une multicouche **selon l'une quelconque des revendications 6 à 14** pour l'une quelconque des applications suivantes : a) recouvrement de fossés utilisés pour le drainage latéral des eaux de surface et de précipitations le long des routes et des voies ferrées, b) recouvrement de banques de rivières et de pentes pour le contrôle de l'érosion, c) barrière dans des systèmes de revêtement de décharges, d) réparations locales dans des structures en béton, telles que des chapes et des toits, e) réparations locales des tuyaux de drainage en béton enterrés, g) réparations locales dans la masse corporelle en béton projeté.
